# EUROPEAN PATENT SPECIFICATION

(11) **EP 1 876 662 B1**
(45) Date of publication and mention of the grant of the patent: **25.04.2012**
(21) Application number: 06715292.6
(22) Date of filing: 06.03.2006
(51) Int. Cl.: H01M 4/04, H01M 4/26

(54) **ELECTRODE MIXTURE PASTE COATING METHOD AND COATER**
ELEKTRODENMISCHUNGSPASTEN-BESCHICHTUNGSVERFAHREN UND BESCHICHTER
PROCEDE ET APPAREIL DE REVETEMENT DE PATE DE MELANGE D'ELECTRODE

(30) Priority: 25.04.2005 JP 2005126290
(43) Date of publication of application: 09.01.2008
(73) Proprietor: Panasonic Corporation, Kadoma-shi Osaka 571-8501 (JP)
(72) Inventor: USUI, Hiroyuki c/o Matsushita Electric Industrial Co., Ltd. Intellectual Property Rights Operations Company, Osaka 540-6207 (JP); MINAMINO, Keiji c/o Matsushita Electric Industrial Co., Ltd. Intellectual Property Rights Operations Company, Osaka 540-6207 (JP)
(74) Representative: Haley, Stephen
(86) International application number: PCT/JP2006/304272
(87) International publication number: WO 2006/114939

(56) References cited:
- JP-A- 11 329 418
- JP-A- 61 203 560
- JP-A- 2002 124 299
- JP-A- 2003 203 626
- JP-B2- 3 557 043
- JP-B2- 3 561 585
- US-A- 4 887 349

## Description

### TECHNICAL FIELD

The present invention relates to a method and apparatus for applying electrode mixture paste, and in particular, to a method and apparatus for applying electrode mixture paste on both sides of a core material made of porous metal sheet with a required precision and good production yield.

### BACKGROUND ART

Alkaline rechargeable batteries and lithium ion rechargeable batteries are widely used as the power source of portable devices, electric tools, or electric vehicles. Nickel metal hydride rechargeable batteries, among others, have a relatively high energy density and excellent durability, and have found increasing applications particularly in electric vehicle power source systems.

The main compositions of nickel metal hydride rechargeable battery are, generally, a positive electrode formed of a three-dimensional porous metal body filled with nickel hydroxide and other components, and a negative electrode formed of a core material which is a porous metal sheet such as punched metal and electrode mixture paste composed of hydrogen-absorption alloy and other components applied on the core material. Of these two, the negative electrode is attracting attention because of its potential for continuous production and possibilities of highly efficient manufacture.

More specifically, a known technique is to accommodate electrode mixture paste in a container with a predetermined gap in a lower part and to drive the core material to run upwards through the container from the gap in the lower part, so that the core material is immersed in the electrode mixture paste and coated with the paste on both sides, after which the thickness of the applied paste is adjusted (see, for example, Patent Document 1).

With the application method according to Patent Document 1, there is a risk of paste leakage from the gap in the lower part depending on the viscosity of the electrode mixture paste or the feeding speed of the core material. To avoid this risk, a production method of non-electrolyte rechargeable battery has been proposed, in which electrode sheet is turned around a roll that is immersed in a polymer solution and the roll is rotated so as to impregnate the electrode sheet with polymer (see, for example, Patent Document 2), and this method could be applied to production of negative electrodes of nickel metal hydride rechargeable battery.
[Patent Document 1] Japanese Patent Laid-Open Publication No. 9-129195
[Patent Document 2] Japanese Patent Laid-Open Publication No. 2000-124299

### DISCLOSURE OF THE INVENTION

### PROBLEMS TO BE SOLVED BY THE INVENTION

Generally, electrode mixture paste used in a coating process for production of electrodes, such as negative electrode of nickel metal hydride rechargeable battery, is prepared to have a viscosity of 50 to 400 poise, mostly 150 to 300 poise, according to measurement results using a B-type viscometer, in consideration of storage stability and other factors. When the core material is turned around the roll immersed in electrode mixture paste having such a high viscosity and the roll is rotated to coat the core material with the paste, one problem is that, if the roll has a smooth surface, the high-viscosity electrode mixture paste that has entered between the roll and the core material cannot escape through the pores formed in the core material because of the high viscosity, causing the core material to lift up from the outer surface of the roll and to meander, because of which the coating precision in the widthwise dimension of the core material is deteriorated. Patent Document 2 discloses providing holes or irregularities in the outer surface of the roll to ensure sufficient contact between the electrode sheet and polymer, which, however, does not solve this problem.

In light of the problems in the conventional techniques described above, an object of the present invention is to provide a method and apparatus for applying electrode mixture paste on a core material using a roll immersed in the paste, which solves the problem of meandering of the core material that is wound around the roll even in high-viscosity electrode mixture paste so as to avoid deterioration of precision in coating dimensions.

### MEANS FOR SOLVING THE PROBLEMS

To achieve the above object, the present invention provides a method for applying electrode mixture paste including a feeding step in which a strip of core material made of porous metal sheet is driven to run along its lengthwise direction, an application step in which the core material is turned around part of the outer surface of a roll, which is immersed in the electrode mixture paste and formed with grooves in the outer surface along the rotating direction, and is driven forward by rotating the roll, so that the core material is coated with the electrode mixture paste on both sides, an adjusting step in which the coating thickness of the electrode mixture paste is adjusted, and a drying step in which the coated electrode mixture paste is dried.

With this method, in the process of applying the electrode mixture paste on both sides of the core material by turning the core material around the roll immersed in the paste, the paste that has entered between the outer surface of the roll and the core material is mostly guided into the grooves and then released smoothly from the grooves to the outside of the gap between the roll and the core material. Thereby a thick layer of high-viscosity electrode mixture paste is not formed between the outer surface of the roll and the core material. This prevents an unwanted situation where the core material lifts up from the outer surface of the roll and meanders, which will cause deterioration of coating precision in the widthwise dimension of the core material.

The grooves in the outer surface of the roll should preferably be formed such that the pitch distance in the axial direction is in a range of from 5 to 50 mm and the groove width is 50 to 95% of the pitch distance, so that the core material is held with its planarity being maintained, while the paste releasing effect provided by the grooves is sufficiently achieved, and the above effects are reliably attained.

The present invention also provides an apparatus for applying electrode mixture paste, the apparatus including an uncoiler unit for unwinding a core material made of porous metal sheet from a coil, a coating unit having a roll immersed in the electrode mixture paste and formed with grooves in the outer surface along the rotating direction, the core material being turned around part of the outer surface of the roll to coat the core material with the electrode mixture paste on both sides, a coating thickness adjusting unit for adjusting the coating thickness of the electrode mixture paste, a drying unit for drying the electrode mixture paste, and a coiler unit for taking up the core material into a coil, on which the electrode mixture paste has been applied and dried.

With this structure, the effects provided by the above application method are achieved when the core material fed from the uncoiler unit is coated with high-viscosity electrode mixture paste in the coating unit, where the roll is immersed in the electrode mixture paste. Thus the electrode mixture paste is applied without the coating precision in the widthwise dimension being deteriorated, and the coiler unit produces a coil of core material, on which the electrode mixture paste has been applied and dried.

The grooves in the outer surface of the roll should preferably be formed such that the pitch distance in the axial direction is in a range of from 5 to 50 mm and the groove width is 50 to 95% of the pitch distance, so that the core material is held with its planarity being maintained, while the paste releasing effect provided by the grooves is sufficiently achieved, and the above effects are reliably attained.

### BRIEF DESCRIPTION OF THE DRAWINGS

Fig. 1 is a schematic perspective view illustrating the structure of one embodiment of the apparatus for applying electrode mixture paste according to the present invention;
Fig. 2 is a perspective view illustrating major components of the coating unit in the same embodiment; and
Fig. 3 is a detailed cross-sectional view of the grooves in the outer surface of the roll in the same embodiment.

### BEST MODE FOR CARRYING OUT THE INVENTION

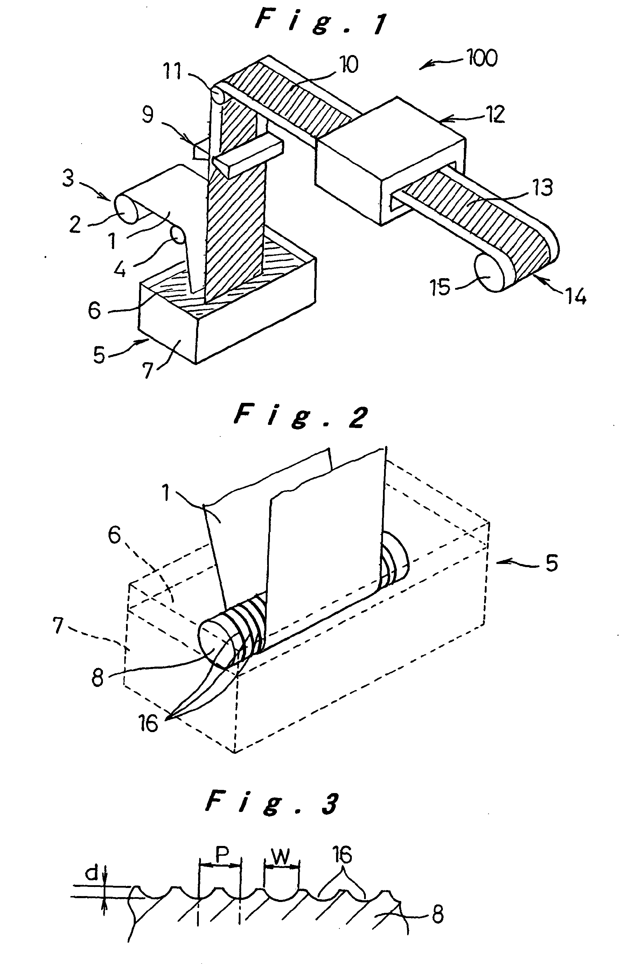

One embodiment of the method and apparatus for applying electrode mixture paste of the present invention will be hereinafter described with reference to Fig. 1 to Fig. 3.

Fig. 1 is a perspective view illustrating the schematic overall structure of one embodiment of the application apparatus 100. The application apparatus 100 includes an uncoiler unit 3 which holds a coil of core material 2 and unwinds the strip of core material 1 made of porous metal sheet. The core material 1 is drawn out horizontally from the uncoiler unit 3, turned about 90° around a guide roller 4 to be directed downwards and to run into a coating unit 5.

The coating unit 5 includes a paste bath 7 filled with electrode mixture paste 6, and as shown in Fig. 2, a roll 8 that is rotatable around a horizontal axis is mostly or entirely immersed in the electrode mixture paste 6 of the paste bath 7. As the core material 1 guided into the coating unit 5 turns about 180° around the roll 8 immersed in the electrode mixture paste 6 and goes upwards, the paste 6 is applied entirely on both sides of the core material 1.

The core material 1 coated with the electrode mixture paste 6 runs upwards and passes through a coating thickness adjusting unit 9 where the coating thickness of the paste is adjusted, and comes out as a paste-coated sheet 10. The paste-coated sheet 10 turns about 90° around a guide roller 11 to be directed to the horizontal direction, runs into a drying unit 12 where the electrode mixture paste 6 is dried, and comes out as an electrode sheet 13, which is taken up in a coiler unit 14 to produce a coil of electrode 15.

The roll 8 in the coating unit 5 is formed with multiple parallel grooves 16 having a semi-circular cross section all around the outer circumference along the rotating direction. These grooves 16 are formed to provide a support surface that can hold the core material 1 while maintaining the planarity of the core material 1 and that can smoothly release the electrode mixture paste 6 from the gap between the outer surface of the roll 8 and the core material 1, even when the paste 6 has a high viscosity of 50 to 400 poise or mostly 150 to 300 poise (according to a B-type viscometer). More specifically, referring to Fig. 3, the pitch distance P of the grooves 16 is 5 to 50 mm, and the groove width w of the grooves 16 in the axial direction is (0.5 to 0.95) x P. The cross section of the grooves 16 is not limited to the semi-circular shape, but may be trapezoidal, square, or other shapes, and the depth d of the grooves 16 is set such as to secure a cross-sectional area with which a predetermined amount of electrode mixture paste 6 is accommodated in the grooves 16 and then released smoothly. Better effect cannot be expected if it is too deep; it is usually set about 2 to 4 mm. With the depth being in this range, if the pitch distance P is too large and the groove width w too small, or if the pitch distance P and the groove width w are both too small, the electrode mixture paste 6 of high viscosity cannot be smoothly released from the gap between the outer surface of the roll 8 and the core material 1 through the grooves 16. On the contrary, if the pitch distance P and the groove width w are too large, the planarity of the core material 1 as it is held cannot be maintained.

With the coating unit 5 as described above, through the process of applying the electrode mixture paste 6 on both sides of the core material 1 by turning the core material 1 around the roll 8 that is immersed in the paste 6, most of the paste 6 that has entered between the outer surface of the roll 8 and the core material 1 is guided into the grooves 16 and smoothly released to the outside of the gap between the roll 8 and the core material 1 through the grooves 16, so that a thick layer of high-viscosity electrode mixture paste 6 is not formed between the outer surface of the roll 8 and the core material 1. An unwanted situation where the core material 1 lifts up from the outer surface of the roll 8 and meanders is reliably prevented, and as a result, deterioration of coating precision of the paste 6 in the widthwise dimension of the core material 1 is avoided.

As is clear from the description of the embodiment above, the present invention can be applicable to any core material of porous metal sheet and is not limited to production of negative electrodes. For example, the invention is applicable to production of sintered substrates which are a precursor of sintered nickel positive electrode of an alkaline rechargeable battery, or positive or negative electrodes of lithium polymer batteries that use metal lath, which is a porous metal sheet.

The following is a description of working examples in which the present invention is applied to the negative electrode (hydrogen-absorption alloy electrode) of nickel metal hydride rechargeable battery, and comparative examples.

### (Example 1)

Hydrogen-absorption alloy expressed by the composition formula MmNi_{3.55}Co_{0.75}Mn_{0.4}Al_{0.3} was pulverized in water by wet ball mill to achieve hydrogen-absorption alloy powder with a mean particle diameter of 30 µm. The hydrogen-absorption alloy powder was immersed in alkaline aqueous solution for surface treatment, after which 10 kg of carboxymethyl cellulose solution with a solid component ratio of 1.5 % and 0.4 kg of Ketjen black were added to 100 kg of the hydrogen-absorption alloy powder and kneaded, and then 1.75 kg of styrenebutadiene copolymer rubber particles in aqueous solution with a solid component ratio of 40 % was added and stirred, to produce electrode mixture paste 6.

The electrode mixture paste 6 was applied on both sides of a core material 1 made of nickel-plated punched iron sheet with a thickness of 60 µm, a width of 300 mm, a punched hole diameter of 1 mm, and a pore rate of 42%, at a speed of 5 m/min (total length of the coiled core material 2: 200 m), such that the coating width will be 260 mm and the total coating thickness will be 260 µm, while scraping off the paste 6 from 20 mm wide margins at both side edges. More specifically, the core material 1 and other units were arranged as shown in Fig. 1 and Fig. 2. The roll 8 had a diameter of 200 mm, an axial length of 400 mm, and the pitch distance P of the grooves 16 was 10 mm, the groove width w being 8 mm and the groove depth d being 2.5 mm.

The electrode mixture paste 6 was applied on the core material 1 over a length of 200 m under the above conditions, after which the distance from one side edge of the core material 1 to the portion where the paste 6 has been applied was measured at the end part of the paste-coated sheet 10 (coating end). According to the results, the misalignment relative to the default length of 20 mm was only 0.05 mm.

### (Examples 2 to 5)

As compared to Example 1, the pitch distance P of the grooves 16 formed in the surface of the roll 8 was set 50 mm, 25 mm, 7 mm, and 5 mm for Examples 2 to 5, respectively, while the groove width w was set to be P x 0.8. With the other parameters being the same as those of Example 1, the electrode mixture paste 6 was applied on the core material 1.

The electrode mixture paste 6 was coated on the core material 1 over a length of 200 m, after which the distance from one side edge of the core material 1 to the portion where the paste 6 has been applied was measured at the end part of the paste-coated sheet 10. According to the results, the misalignment relative to the default length of 20 mm was 1.6 mm, 0.7 mm, 0.3 mm, and 1.0 mm in Examples 2 to 5, respectively.

### (Comparative Example 1)

The electrode mixture paste 6 was applied similarly to Example 1, the only difference from Example 1 being that no grooves 16 were formed in the surface of the roll 8. The electrode mixture paste 6 was applied on the core material 1 over a length of 200 m, after which the distance from one side edge of the core material 1 to the portion where the paste 6 has been applied was measured at the end part of the paste-coated sheet 10. According to the results, the misalignment relative to the default length of 20 mm was 3.4 mm.

### (Comparative Example 2)

The electrode mixture paste 6 was applied similarly to Example 1, the only difference from Example 1 being that ten axial grooves equally distanced in the rotating direction were formed in the surface of the roll 8. The electrode mixture paste 6 was applied on the core material 1 over a length of 200 m, after which the distance from one side edge of the core material 1 to the portion where the paste 6 has been applied was measured at the end part of the paste-coated sheet 10. According to the results, the misalignment relative to the default length of 20 mm was 3.1 mm.

As described above, the grooves 16 along the rotating direction in the outer surface of the roll 8 proved to be a great restriction on lifting up and meandering of the core material 1 due to the high-viscosity electrode mixture paste 6. The pitch distance P of the grooves 16 should preferably be in a range of from 5 to 50 mm as in Examples 1 to 5, and more preferably, as in Examples 1, 3 to 5, the pitch distance P should be 5 to 25 mm to restrict the meandering width to 1 mm or less. The meandering width in Comparative Example 2 in which grooves were formed along the axial direction of the roll 8 was substantially the same as that of Comparative Example 1 in which no grooves were formed. This shows that release of high-viscosity electrode mixture paste 6 from the gap between the outer surface of the roll 8 and the core material 1 has physical relevance to rotation of the roll 8 and that grooves that do not extend along the rotating direction do not provide the effects of the present invention.

### INDUSTRIAL APPLICABILITY

As described above, according to the method for applying electrode mixture paste of the present invention, through the process of applying the paste on both sides of a core material by turning the core material around a roll immersed in the paste, most of the paste that has entered between the outer surface of the roll and the core material is released smoothly to the outside of the gap between the roll and the core material through the grooves. This prevents an unwanted situation where the core material lifts up from the outer surface of the roll and meanders, which will cause deterioration of coating precision in the widthwise dimension of the core material. Even if the electrode mixture paste has a high viscosity which is given in consideration of storage stability, the paste is applied with high precision particularly in the widthwise direction of the core material. Therefore the present invention is highly applicable to electrode production techniques of various batteries, and can be used in the production of electrodes of various batteries such as lithium ion batteries and nickel metal hydride batteries.

## Claims

1. A method for applying electrode mixture paste, comprising:
a feeding step in which a strip of core material (1) made of porous metal sheet is driven to run along a lengthwise direction thereof;
an application step in which the core material is turned around part of an outer surface of a roll (8), which is immersed in an electrode mixture paste (6) and formed with grooves (16) in the outer surface along a rotating direction, and is driven forward by rotating the roll, so that the core material is coated with the electrode mixture paste on both sides;
an adjusting step in which a coating thickness of the electrode mixture paste is adjusted; and
a drying step in which the coated electrode mixture paste is dried.

2. The method for applying electrode mixture paste according to claim 1, wherein the grooves (16) in the outer surface of the roll (8) are formed such that a pitch distance in an axial direction is in a range of from 5 to 50 mm and a groove width is 50 to 95% of the pitch distance.

3. An apparatus for applying electrode mixture paste, comprising:
an uncoiler unit (3) for unwinding a core material (1) made of porous metal sheet from a coil;
a coating unit having a roll (8) immersed in an electrode mixture paste (6) and formed with grooves (16) in an outer surface thereof along a rotating direction, the core material being turned around part of the outer surface of the roll to coat the core material with the electrode mixture paste on both sides;
a coating thickness adjusting unit (9) for adjusting a coating thickness of the electrode mixture paste;
a drying unit (12) for drying the electrode mixture paste; and
a coiler unit (14) for taking up the core material into a coil, on which the electrode mixture paste has been applied and dried.

4. The apparatus for applying electrode mixture paste according to claim 3, wherein the grooves (16) in the outer surface of the roll (8) are formed such that a pitch distance in an axial direction is in a range of from 5 to 50 mm and a groove width is 50 to 95% of the pitch distance.

## Patentansprüche

1. Verfahren zum Auftragen von Elektrodenmischungspaste, umfassend:
einen Zuführungsschritt, bei dem ein Streifen eines Kerenmaterials (1), das aus porösem Metallblech hergestellt ist, angetrieben wird, entlang einer Längsrichtung davon zu laufen;
einen Auftragungsschritt, bei dem das Kemmaterial um einen Teil einer Außenfläche einer Rolle (8) gedreht wird, die in eine Elektrodenmischungspaste (6) eingetaucht und mit Nuten (16) in der Außenfläche entlang einer Rotationsrichtung versehen ist und durch Rotieren der Rolle vorwärtsgetrieben wird, sodass das Kemmaterial auf beiden Seiten mit der Elektrodenmischungspaste beschichtet wird;
einen Verstellschritt, bei dem eine Beschichtungsdicke der Elektrodenmischungspaste verstellt wird; und
einen Trocknungsschritt, bei dem die beschichtete Elektrodenmischungspaste getrocknet wird.

2. Verfahren zum Auftragen von Elektrodenmischungspaste nach Anspruch 1, wobei die Nuten (16) in der Außenfläche der Rolle (8) so gebildet sind, dass ein Teilungsabstand in einer axialen Richtung im Bereich von 5 bis 50 mm liegt und eine Nutenbreite 50 bis 95% des Teilungsabstands beträgt.

3. Vorrichtung zum Auftragen von Elektrodenmischungspaste, umfassend:
eine Abwickeleinheit (3) zum Abwickeln eines aus porösem Metallblech hergestellten Kernmaterials (1) von einer Rolle;
eine Beschichtungseinheit mit einer Rolle (8), die in einer Elektrodenmischungspaste (6) eingetaucht ist und mit Nuten (16) in einer Außenfläche davon entlang einer Rotationsrichtung gebildet ist, wobei das Kemmaterial um einen Teil der Außenfläche der Rolle gedreht wird, um das Kemmaterial auf beiden Seiten mit der Elektrodenmischungspaste zu beschichten;
eine Verstelleinheit (9) zum Verstellen einer Beschichtungsdicke der Elektrodenmischungspaste;
eine Trocknungseinheit (12) zum Trocknen der Elektrodenmischungspaste; und
eine Aufwickeleinheit (14) zum Aufwickeln des Kemmaterials, auf das die Elektrodenmischungspaste aufgetragen und getrocknet worden ist, zu einer Rolle.

4. Vorrichtung zum Auftragen von Elektrodenmischungspaste nach Anspruch 3, wobei die Nuten (16) in der Außenfläche der Rolle (8) so gebildet sind, dass ein Teilungsabstand in einer axialen Richtung im Bereich von 5 bis 50 mm liegt und eine Nutenbreite 50 bis 95% des Teilungsabstands beträgt.

## Revendications

1. Procédé pour appliquer une pâte d'un mélange électrode, comprenant :
une étape d'alimentation dans laquelle un ruban de matériau de coeur (1) réalisé en une tôle métallique poreuse est entraîné pour circuler le long de la direction de sa longueur ;
une étape d'application dans laquelle le matériau de coeur est tourné autour d'une partie d'une surface extérieure d'un rouleau (8), qui est immergée dans une pâte de mélange électrode (6) et formée avec des gorges (16) dans la surface extérieure le long d'une direction de rotation, et est entraîné en avant en faisant tourner le rouleau, de sorte que le matériau de coeur est revêtu avec la pâte de mélange électrode sur les deux côtés ;
une étape d'ajustement dans laquelle une épaisseur de revêtement de la pâte de mélange électrode est ajustée ; et
une étape de séchage dans laquelle la pâte de mélange électrode revêtue est séchée.

2. Procédé pour appliquer une pâte d'un mélange électrode selon la revendication 1, dans lequel les gorges (16) dans la surface extérieure du rouleau (8) sont formées de telle façon qu'une distance de pas dans une direction axiale est dans une gamme de 5 à 50 mm, et la largeur de gorge est de 50 à 95 % de la distance de pas.

3. Appareil pour appliquer une pâte d'un mélange électrode, comprenant :
une unité de déroulement (3) pour dérouler un matériau de coeur (1) réalisé en tôle métallique poreuse depuis une bobine ;
une unité de revêtement ayant un rouleau (8) immergé dans une pâte de mélange électrode (6) et formée avec des gorges (16) dans sa surface extérieure le long d'une direction de rotation, le matériau de coeur étant tourné autour d'une partie de la surface extérieure du rouleau pour revêtir le matériau de coeur avec la pâte de mélange électrode sur les deux côtés ;
une unité d'ajustement d'épaisseur de revêtement (9) pour ajuster une épaisseur de revêtement de la pâte de mélange électrode ;
une unité de séchage (12) pour sécher la pâte de mélange électrode ; et
une unité d'enroulement (14) pour reprendre le matériau de coeur sous forme d'une bobine, sur laquelle la pâte de mélange électrode a été appliquée est séchée.

4. Appareil pour appliquer une pâte de mélange électrode selon la revendication 3, dans lequel les gorges (16) dans la surface extérieure du rouleau (8) sont formées de telle façon qu'une distance de pas dans une direction axiale est dans une gamme de 5 à 50 mm, et une largeur des gorges est de 50 à 95 % de la distance de pas.
